# EUROPÄISCHE PATENTSCHRIFT

(11) **EP 1 445 564 B1**
(45) Veröffentlichungstag und Bekanntmachung des Hinweises auf die Patenterteilung: **26.07.2006**
(21) Anmeldenummer: 04001459.9
(22) Anmeldetag: 23.01.2004
(51) Int. Cl.: F27B 7/20, C04B 7/43

(54) **Verfahren und Anlage zur Wärmebehandlung von mineralischen Rohstoffen**
Process and installation for heat treatment of mineral raw materials
Procédé et installation pour le traitement thermique de matières minérales

(30) Priorität: 10.02.2003 DE 10305367
(43) Veröffentlichungstag der Anmeldung: 11.08.2004
(73) Patentinhaber: Polysius AG, 59269 Beckum (DE)
(72) Erfinder: Kreft, Wilfried, 59320 Ennigerloh (DE); Schütte, Rainer, 59320 Ennigerloh (DE)
(74) Vertreter: Tetzner, Michael

(56) Entgegenhaltungen:
- EP-A- 0 154 281
- DE-A- 2 621 219
- DE-A- 2 630 907
- DE-A- 3 926 756
- DE-B- 1 147 165
- GB-A- 874 818
- GB-A- 1 037 193

## Beschreibung

Die Erfindung betrifft ein Verfahren und eine Anlage zur Wärmebehandlung von mineralischen Rohstoffen in einem Brennofen mit vorgeschaltetem Rostwärmer, der in eine Heißkammer und eine Trockenkammer aufgeteilt ist.

Die Rauchgase des Brennofens gelangen in die Heißkammer zur Vorwärmung der Rohstoffe. Die Abgase der Heißkammer treten in die Trockenkammer ein und trocknen die Rohstoffe, beispielsweise Granalien oder Stückgut. Aus der Praxis ist bekannt, die Abgase der Trockenkammer alleine oder zusammen mit Kühlerabluft in einem Mahltrocknungssystem energetisch zu nutzen.

Bei Verwendung von Primärbrennstoffen mit geringen Kontaminationen an salzbildenden Komponenten, die auch zu Kreisläufen im gesamten System führen können, hat sich dieses Brennsystem in der Praxis gut bewertet. Erst bei Einsatz von Brennstoffen mit höheren Konzentrationen an salzbildenden Komponenten kann es zu Betriebsproblemen mit verstärkter Ansatzbildung im Rostvorwärmer durch Aufkonzentration von Salzverbindungen am Brenngut kommen. Die üblicherweise im Übergangsbereich von Ofen und Rostvorwärmer angeordneten Bypasseinrichtungen, die eine Kreislaufunterbrechung erzielen sollen, arbeiten bei derartigen Rostvorwärmern, die im Gasverbund mit einer Mahlanlage stehen, nicht besonders effektiv. Der Grund liegt darin, dass die im Ofen verdampften Salzverbindungen an der geringen Oberfläche des Brenngutes auf dem Rostbett nur wenig absorbieren, bzw. die Heißkammer über den Gasweg verlassen und in die Trockenkammer eintreten. Dort findet jedoch eine höhere Absorption der Salze am Brenngut statt, was zu einem Verkleben des Brenngutbettes führen kann.

Es ist bekannte Praxis, die staubhaltigen Abgase der Heißkammer einem Zyklonabscheider zu zuführen. Die vom Staubgehalt teilweise befreiten Abgase werden wieder der Trockenkammer zugeführt, während der abgeschiedene Staub aus dem System ausgeschleust wird. Diese Staubausschleusung bringt zwar eine gewisse Verbesserung, kann jedoch keineswegs als Lösung des obigen Problems angesehen werden.

Die DE-B-11 47 165 zeigt einen Brennofen mit vorgeschaltetem Rostvorwärmer. Der Rostvorwärmer ist in eine Heißkammer und eine Trockenkammer aufgeteilt, wobei die Abgase aus dem Brennofen die Heißkammer durchströmen, dort dann vollständig abgezogen und einer Vorentstaubungseinrichtung zugeführt werden. Das entstaubte Gas tritt dann ein zweites Mal über eine Sammelleitung in den Rostvorwärmer, nämlich die Trockenkammer ein.

In der DE-A-26 30 907 und der EP-A-0 154 281 werden Vorrichtungen zur thermischen Behandlung von Zementrohgut beschrieben, die statt eines Rostvorwärmers einen Schwebegasvorwärmer aufweisen, wobei ein Teil der Abgase des Drehofens vor dem Vorwärmer als Bypassgase abgezweigt wird.

Der Erfindung liegt daher die Aufgabe zugrunde, die Anlage sowie das Verfahren zur Wärmebehandlung von mineralischen Rohstoffen dahingehend zu verbessern, dass eine deutliche Kreislaufentlastung stattfindet und das oben beschriebene Verkleben des Brenngutes in der Trockenkammer weitgehend vermieden werden kann.

Erfindungsgemäß wird diese Aufgabe durch die Merkmale der Ansprüche 1 und 11 gelöst.

Das erfindungsgemäße Verfahren zur Wärmebehandlung von mineralischen Rohstoffen in einem Brennofen mit vorgeschaltetem Rostvorwärmer, der in eine Heißkammer und eine Trockenkammer aufgeteilt ist, sieht vor, dass die Abgase aus dem Brennofen die Heißkammer und die Trockenkammer durchströmen, wobei ein Teil der staubhaltigen Abgase aus dem Rostvorwärmer abzweigt und zumindest ein Teil der abgezweigten Abgase einem Filter zugeführt werden, wobei das im Filter gereinigte Abgas und der abgeschiedene Staub nicht zum Rostvorwärmer zurückgeführt werden.

Die erfindungsgemäße Anlage zur Wärmebehandlung von mineralischen Rohstoffen weist einen Brennofen sowie einen vorgeschalteten Rostvorwärmer auf, der in eine Heißkammer und eine Trockenkammer unterteilt ist. Die Abgase des Brennofens durchströmen die Heißkammer und teilweise die Trockenkammer. Ferner sind Mittel zum Ausschleusen eines Teils der Abgase aus dem Rostvorwärmer vorgesehen. Zum Ausgleich der in der Trockenkammer fehlenden Wärme sind zudem Mittel zum Zuführen von Heißgas, insbesondere von Abluft eines Kühlers, zur Trockenkammer vorgesehen.

Weitere Ausgestaltungen der Erfindung sind Gegenstand der Unteransprüche.

In einer bevorzugten Ausgestaltung der Erfindung werden die im Filter gereinigten Abgase einem Mahlsystem zugeführt.

Die Menge der im Filter zu reinigenden Abgase, die nicht mehr zum Rostvorwärmer zurückgeführt werden, hängt von der Kontamination an salzbildenden Komponenten des verwendeten Brennstoffs ab und wird zweckmäßigerweise entsprechend gesteuert.

In der Zeichnung zeigen
- Fig. 1: eine Anlage zur Wärmebehandlung von mineralischen Rohstoffen gemäß einem ersten Ausführungsbeispiel,
- Fig. 2: eine Anlage zur Wärmebehandlung von mineralischen Rohstoffen gemäß einem zweiten Ausführungsbeispiel und
- Fig. 3: eine Anlage zur Wärmebehandlung von mineralischen Rohstoffen gemäß einem dritten Ausführungsbeispiel.

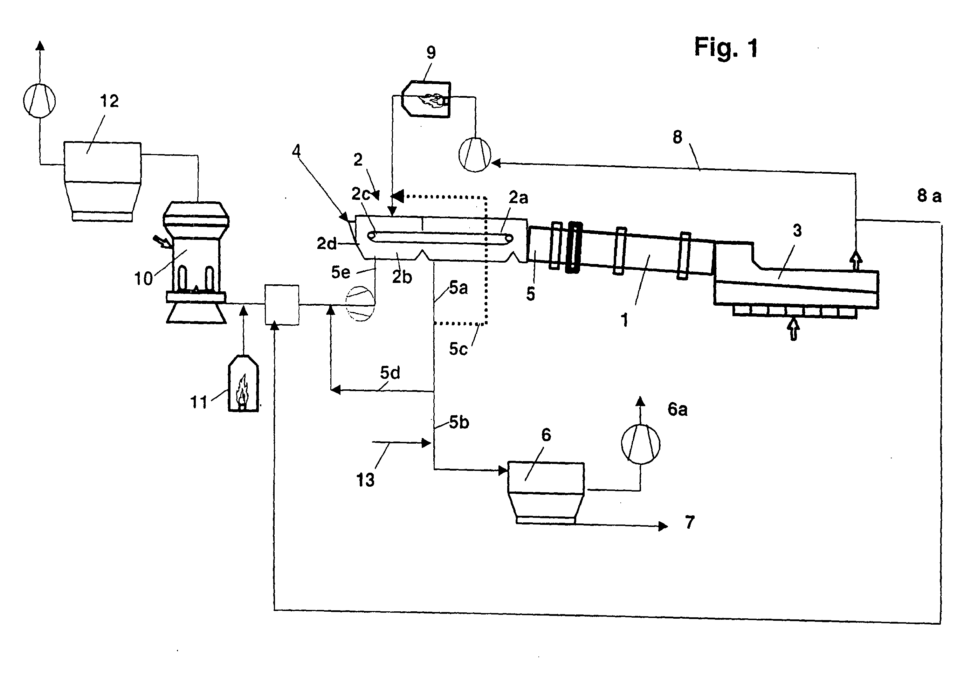

Die in Fig. 1 dargestellte Anlage besteht im Wesentlichen aus einem Brennofen 1 sowie einem Rostvorwärmer 2, der in eine Heißkammer 2a und eine Trockenkammer 2b aufgeteilt ist. Dem Brennofen 1 nachgeschaltet ist ferner ein Kühler 3.

Der Rostvorwärmer 2 weist einen statischen oder beweglichen Rostboden 2c auf, über den die über eine Aufgabestelle 2d zugeführten Rohstoffe 4 zum mit dem Brennofen 1 in Verbindung stehenden Ende transportiert werden. Das im Brennofen gebrannte Gut wird schließlich im Kühler 3 abgekühlt.

Die Abgase 5 des Brennofens 1 durchströmen die Heißkammer 2a und die Trockenkammer 2b, wobei ein Teil 5a der staubhaltigem Abgase aus der Heißkammer 2a abgezweigt wird.

Von dem abgezweigten Abgasen 5a wird zumindest ein Teil 5b einem Filter 6 zugeführt. Dieser Filter 6 wird beispielsweise durch einen Gewebefilter oder einen Elektrofilter gebildet und ist somit in der Lage, den Staub des Abgases sowie daran angelagerte Schadstoffe aus der Gasphase auszufiltern. Die sich ergebenden Stäube, die mit Salzmengen angereicht sind, werden aus dem System ausgeschleust (Pfeil 7).

Ein anderer Teil 5c der abgezweigten Abgase kann der Trockenkammer 2b zugeführt werden.

Die fehlende Wärme in der Trockenkammer 2b wird durch Abluft 8 des Kühlers 3 ersetzt, wobei in der Zuführleitung eine zusätzliche Wärmequelle 9 vorgesehen werden kann. Ein weiterer Teilstrom der Kühlerabluft wird über die Leitung 8a dem Mahlsystem zugeführt.

Es besteht zudem die Möglichkeit, einen Teil 5d einem Mahlsystem, insbesondere einem Mahltrocknungssystem zu zuleiten, um dort Trocknungswärme einzubringen und einen Teil der Salze in das Mahlgut einzubinden. Auch die Abgase 5e des Rostvorwärmers 2 können dem Mahlsystem 10 zugeführt werden. Zu Erhöhung der Wärmemenge kann gegebenenfalls eine weitere Wärmequelle 11 vorgesehen werden. Ein weiterer Filter 12 dient zur Reinigung der das Mahlsystem 10 verlassenden Abgase.

Je nach Temperatur der dem Filter 6 zu zuführenden Teilmenge 5b kann eine Abkühlung erforderlich sein. Diese kann beispielsweise durch Quenchen mittels Frischluft 13 erfolgen.

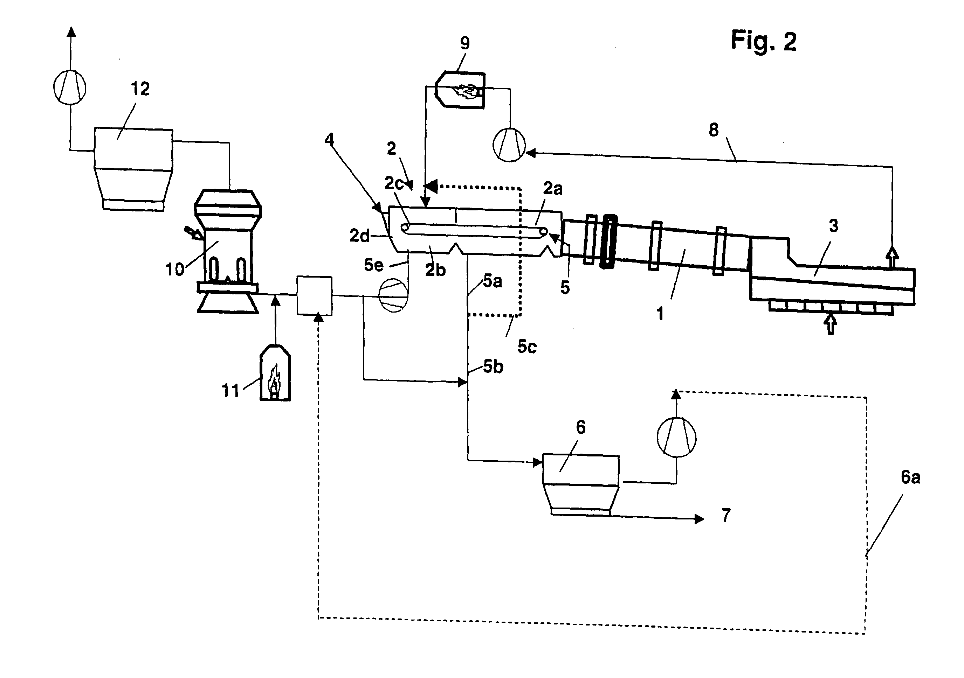

Fig. 2 zeigt ein zweites Ausführungsbeispiel, bei dem die Quenschung der Abgase 5b vor dem Filter 6 nicht mit Frischluft, sondern mit einem Teil der Abgase des Rostvorwärmers 2 erfolgt. Diese Schaltung bietet sich insbesondere dann an, wenn mit den gefilterten Abgasen an einer anderen Stelle des Prozesses noch Wärme genutzt werden soll. Im dargestellten Ausführungsbeispiel werden die gefilterten Abgase 6a dem Mahlsystem 10 zugeführt. Dadurch ergibt sich gegenüber dem Ausführungsbeispiel gemäß Fig. 1 ein wesentlich höherer Wärmeinhalt der zum Mahlsystem zugeführten Gase. Die Zuführung der gefilterten Abgase 6a zum Mahlsystem 10 führt zu einer Einsparung an Wärme im Mahlsystem, die sonst mit einer separaten Wärmequelle bereitgestellt werden müsste.

Die Menge der abgezweigten und dem Filter zugeführten Abgase 5b wird zweckmäßigerweise in Abhängigkeit der Kontamination an salzbildenden Komponenten der im Brennofen 1 und/oder im Rostvorwärmer 2 verwendeten Brennstoffe geregelt.

Die oben beschriebene Anlage sowie das Verfahren haben sich als besonders vorteilhaft bei Verwendung von z.B. Sekundärbrennstoffen erwiesen, die bei herkömmlichen Systemen zur verstärkten Verklebungen bzw. Ansatzbildung im Rostvorwärmer führen.

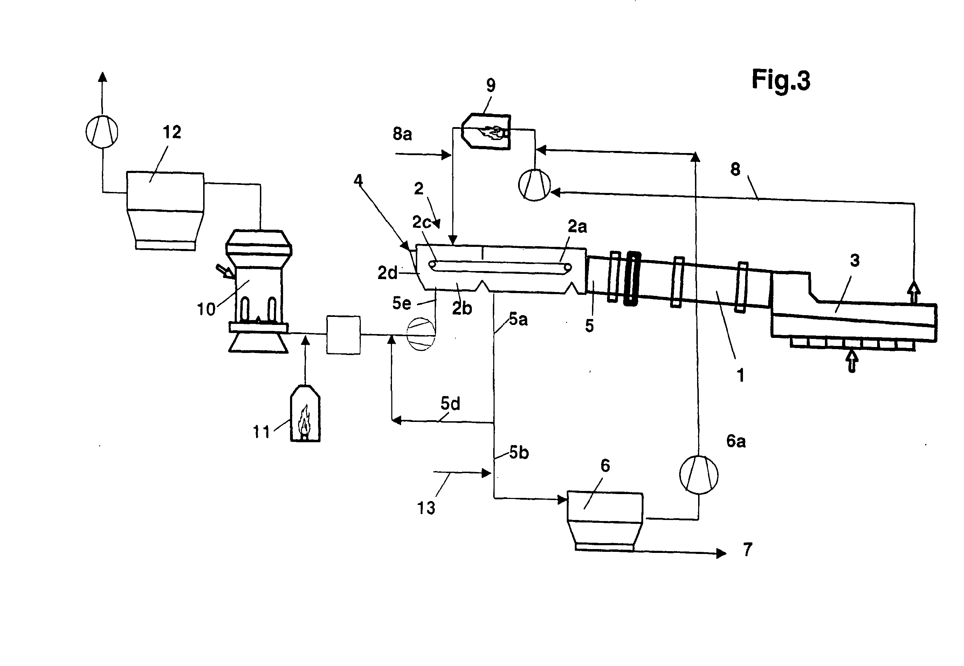

Das Konzept gemäß Fig. 3 sieht vor, dass die Trockenkammer 2b nur mit Kühlerabluft 8 und Bypassfilterabluft 6a beaufschlagt wird. Zur Deckung der Trocknungswärme dient Rauchgas aus der Wärmequelle 9. Zum Ausgleich des Volumenstromes wird Frischluft 8a zugeführt. Diese Schaltung vermeidet eine Absorption von Salzen und dadurch kann ein Verkleben des Brenngutes vermieden werden. Die nicht über den Bypassfilter geführten Gase aus der Heißkammer 2a werden über die Leitung 5d in das Mahlsystem eingeleitet.

## Patentansprüche

1. Verfahren zur Wärmebehandlung von mineralischen Rohstoffen in einem Brennofen (1) mit vorgeschaltetem Rostvorwärmer (2), der in eine Heißkammer (2a) und eine Trockenkammer (2b) aufgeteilt ist, wobei die Abgase (5) aus dem Brennofen die Heißkammer und die Trockenkammer durchströmen, wobei ein Teil der staubhaltigen Abgase (5a) aus dem Rostvorwärmer abgezweigt und einem Abscheider zugeführt wird,
**dadurch gekennzeichnet, dass**
zumindest ein Teil des abgezweigten Abgases (5a) einem als Filter (6) ausgebildeten Abscheider zugeführt wird, wobei das im Filter gereinigte Abgas (6a) nicht zum Rostvorwärmer (2) zurückgeführt wird.

2. Verfahren nach Anspruch 1, **dadurch gekennzeichnet, dass** im Brennofen (1) gebranntes Material in einem Kühler (3) gekühlt wird und wenigstens ein Teil der Kühlerabluft (8) der Trockenkammer (2b) zugeführt wird.

3. Verfahren nach Anspruch 1, **dadurch gekennzeichnet, dass** im Brennofen (1) und/oder Rostvorwärmer (2) durch Salzbildner kontaminierte Brennstoffe zum Einsatz kommen.

4. Verfahren nach Anspruch 1, **dadurch gekennzeichnet, dass** die abgezweigten Abgase (5b) vor dem Filtern abgekühlt werden.

5. Verfahren nach Anspruch 1, **dadurch gekennzeichnet, dass** die abgezweigten Abgase (5b) vor dem Filtern durch Zufuhr von Frischluft (13) abgekühlt werden.

6. Verfahren nach Anspruch 1, **dadurch gekennzeichnet, dass** die abgezweigten Abgase (5b) vor dem Filtern durch Zufuhr von Abgasen des Rostvorwärmers (2) abgekühlt werden.

7. Verfahren nach Anspruch 1, **dadurch gekennzeichnet, dass** das gereinigte Abgas (6a) einem Mahlsystem (10) zugeführt wird.

8. Verfahren nach Anspruch 1, **dadurch gekennzeichnet, dass** ein Teil des abgezweigten Abgases vor dem Filter abgeleitet und der Trockenkammer zugeführt wird.

9. Verfahren nach Anspruch 1, **dadurch gekennzeichnet, dass** die Abgase (5e) des Rostvorwärmers einem Mahlsystem (10) zugeführt werden.

10. Verfahren nach Anspruch 1, **dadurch gekennzeichnet, dass** die Abgase (5e) des Rostvorwärmers und ein Teil der abgezweigten Abgase (5d) einem Mahlsystem (10) zugeführt werden.

11. Anlage zur Wärmebehandlung von mineralischen Rohstoffen mit einem Brennofen (1) sowie einem vorgeschalteten Rostvorwärmer (2), der eine Heißkammer (2a) und eine Trockenkammer (2b) aufweist, wobei die Abgase (5) des Brennofens (1) die Heißkammer (2a) und zumindest teilweise die Trockenkammer (2b) durchströmen und wobei ferner Mittel zum Ausschleusen eines Teils der Abgase aus dem Rostvorwärmer vorgesehen sind,
**gekennzeichnet, durch**
Mittel zum Zuführen von Heißgas, insbesondere Abluft (8) eines Kühlers, zur Trockenkammer (2b).

12. Anlage nach Anspruch 11, **dadurch gekennzeichnet, dass** ein Filter (6) zum Filtern wenigstens eines Teils der ausgeschleusten Abgase (5b) vorgesehen ist.

## Claims

1. Method of heat treatment of mineral raw materials in a kiln (1) with a grate preheater (2) disposed upstream which is divided into a hot chamber (2a) and a dry chamber (2b), wherein the exhaust gases (5) from the kiln flow through the hot chamber and the dry chamber, wherein a portion of the dust-laden exhaust gases (5a) is branched off from the grate preheater and is delivered to a separator, **characterised in that** a least a portion of the exhaust gas (5a) which is branched of is delivered to a separator constructed as a filter (6), wherein the exhaust gas (6a) purified in the filter is not returned to the grate preheater (2).

2. Method as claimed in Claim 1, **characterised in that** material fired in the kiln (1) is cooled in a cooler (3) and at least a portion of the exhaust air (8) from the cooler is delivered to the dry chamber (2b).

3. Method as claimed in Claim 1, **characterised in that** fuels contaminated by salt formers are used in the kiln (1) and/or grate preheater (2).

4. Method as claimed in Claim 1, **characterised in that** the exhaust gases (5b) which are branched off are cooled before filtering.

5. Method as claimed in Claim 1, **characterised in that** the exhaust gases (5b) which are branched off are cooled before filtering by the delivery of fresh air (13).

6. Method as claimed in Claim 1, **characterised in that** the exhaust gases (5b) which are branched off are cooled before filtering by the delivery of exhaust gases from the grate preheater (2).

7. Method as claimed in Claim 1, **characterised in that** the purified exhaust gas (6a) is delivered to a grinding system (10).

8. Method as claimed in Claim 1, **characterised in that** a proportion of the exhaust gas which is branched of is diverted before the filter and delivered to the dry chamber.

9. Method as claimed in Claim 1, **characterised in that** the exhaust gases (5e) from the grate preheater are delivered to a grinding system (10).

10. Method as claimed in Claim 1, **characterised in that** the exhaust gases (5e) from the grate preheater and a portion of the exhaust gases (5d) which are branched off are delivered to a grinding system.

11. Apparatus for heat treatment of mineral raw materials with a kiln (1) as well as a grate preheater (2) disposed upstream which has a hot chamber (2a) and dry chamber (2b) wherein the exhaust gases (5) from the kiln (1) flow through the hot chamber (2a) and at least in part through the dry chamber (2b) and wherein means are also provided for discharge of a portion of the exhaust gases from the grate preheater, **characterised by** means for delivering hot gas, in particular exhaust air (8) from a cooler, to the dry chamber (2b).

12. Apparatus as claimed in Claim 11, **characterised in that** a filter (6) is provided for filtering at least a portion of the discharged exhaust gases (5b).

## Revendications

1. Procédé de traitement thermique de matières premières minérales dans un four (1) avec préchauffeur à grille (2) préalable, qui est divisé en une chambre de chauffage (2a) et une chambre de séchage (2b), où les gaz d'échappement (5) sortant du four, traversent la chambre de chauffage et la chambre de séchage, où une partie des gaz d'échappement contenant des poussières (5a) est déviée du préchauffeur à grille et conduite dans un séparateur,
**caractérisé en ce que**
au moins une partie des gaz d'échappement déviés (5a) est dirigée dans un séparateur formé comme un filtre (6), où les des gaz d'échappement purifiés dans le filtre (6a) ne sont pas ramenés dans le préchauffeur à grille (2).

2. Procédé selon la revendication 1, **caractérisé en ce que** dans le four (1), le matériau brûlé est refroidi dans un refroidisseur (3) et au moins une partie de l'air d'échappement du refroidisseur (8) est dirigée dans la chambre de séchage (2b).

3. Procédé selon la revendication 1, **caractérisé en ce que** dans le four (1) et/ou le préchauffeur à grille (2), on met en oeuvre des combustibles contaminés d'halogène.

4. Procédé selon la revendication 1, **caractérisé en ce que** les gaz d'échappement déviés (5b) sont refroidis avant le filtre.

5. Procédé selon la revendication 1, **caractérisé en ce que** les gaz d'échappement déviés (5b) sont refroidis avant le filtre par apport d'air frais (13).

6. Procédé selon la revendication 1, **caractérisé en ce que** les gaz d'échappement déviés (5b) sont refroidis avant le filtre par apport des gaz d'échappement du préchauffeur à grille (2).

7. Procédé selon la revendication 1, **caractérisé en ce que** les gaz d'échappement purifiés (6a) sont dirigés dans un système de broyage (10).

8. Procédé selon la revendication 1, **caractérisé en ce qu'**une partie des gaz d'échappement déviés est dérivée avant le filtre et dirigée dans la chambre de séchage.

9. Procédé selon la revendication 1, **caractérisé en ce que** les gaz d'échappement (5e) du préchauffeur à grille sont dirigés dans un système de broyage (10).

10. Procédé selon la revendication 1, **caractérisé en ce que** les gaz d'échappement(5e) du préchauffeur à grille et une partie des gaz d'échappement déviés (5d) sont dirigés dans un système de broyage (10).

11. Installation pour le traitement thermique de matières premières minérales avec un four (1), et un préchauffeur à grille (2), qui présente une chambre de chauffage (2a) et une chambre de séchage (2b), où les gaz d'échappement (5) du four, traversent la chambre de chauffage (2a) et au moins partiellement, la chambre de séchage (2b), et où des moyens pour expulser une partie des gaz d'échappement du préchauffeur sont prévus,
**caractérisée par** des moyens pour diriger les gaz chauds, en particulier l'air d'échappement (8) d'un refroidisseur, pour la chambre de séchage (2b).

12. Installation selon la revendication 11, **caractérisée en ce qu'**un filtre (6) est prévu pour filtrer au moins une partie des gaz d'échappement expulsés (5b).
